# EUROPEAN PATENT APPLICATION

(11) **EP 1 336 460 A1**
(43) Date of publication of application: **20.08.2003**
(21) Application number: 02003116.7
(22) Date of filing: 13.02.2002
(51) Int. Cl.: B29C 33/56

(54) **Aluminium mould for forming urethane resin and method for manufacturing urethane resin**

(71) Applicant: Aqua Sonic Service Co., Ltd, T.Bangchalong, A. Bangplee, Samutprakan 10540 (TH)
(72) Inventor: Kitahara, Shoji, Aqua Sonic Service Co., Ltd., T. Bangchalong, Samuthprakan, 10540 (TH)
(74) Representative: Pautex Schneider, Nicole

(57) **Abstract**

The Aluminium mould for forming Urethane resin and the method for manufacturing Urethane resin has high durability and releasability. The mould surface is coated by Nickel containing PTFE and the said mould is used for Urethane resin manufacturing process.

## Description

### FIELD OF THE INVENTION

This invention is engineering relating to Aluminium mould and method for manufacturing urethane resin especially Aluminium mould, which easily releases by coating with PTFE after Nickel, in order to increase the convenience of the product forming, which is high binding with the mould, for example plastics and rubber for automobiles.

### BACKGROUND OF THE INVENTION

The most injecting moulds for forming plastic or tired, which are high binding with the mould, have been made from Iron or Aluminium. In the present, Aluminium is mostly used because it can be easily formed. In this case, the moulds must have releasability and high durable properties.

At first, the mould surface is not enameled. Especially, the Aluminium mould is coated by hard material for durability because the mould is used for injecting the plastic or rubber, which is hard granule, for example the electrolytic or non-electrolytic chromium coating process or film coating for hard ceramic by using CVD method or PVD method. The above methods still have the problem of low releasability thus the mould is sprayed by silicone all the time or required cleaning oftenly.

Because of mould spraying or the oftenly cleaning, efficiency manufacturing of plastic or resin injected forming is reduced. Thus, the injection has to be stopped or many reserved moulds are required therefore in order to high cost.

From the said problem, Polytetrafluoroethylene (PTFE), which is polymer, is come in use (trade name is Teflon). It uses as mould coating film for the better release. However, PTFE has low durability, thus it cannot be used for a long term. Therefore, the mould has been developed by coating with the combination of hard Chromium and Nickel (or separated coating) and PTFE, but it does not have enough durability as shown in the Japanese patent gazette No. HEI6-179218, the mould was coated with PTFE film by ion injection, thus it is better releasability. Moreover, as described in Japanese patent gazette No. HEI5-069459, the mould was coated with diamond carbon or hard carbon having 1-20% molecule of Fluorine. The result shows the development of releasability and durability by use of PTFE. Nevertheless, the mould base is Aluminium thus it is not easy to coat its surface by ion injection. Therefore, the development of the easy and fast coating is need.

### NATURE AND PROPOSE OF THE INVENTION

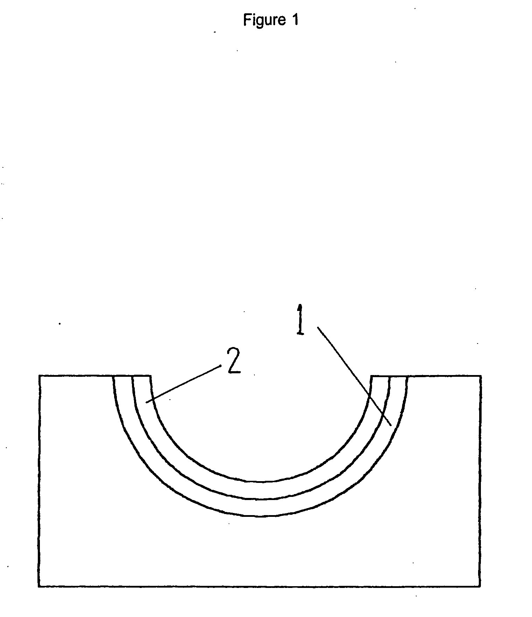

The proposal of this invention is the presentation of Aluminium mould (as shown in Figure 1), which is coated by the combination of Nickel (1) and PTFE (2). Therefore, the mould is higher durability and releasability by PTFE.

The Aluminium mould is coated by Nickel in 80 °C of electrolytes and soaked in the solution having 1 micron PTFE particles, these process are alternately repeated for 4-5 times, then the process is finished. This method is the best method for Urethane forming mould.

### BRIEF DESCRIPTION OF DRAWINGS

Figure 1 shows the section of the coating surface
Figure 2 shows the coating process
Figure 3 shows the Nickel dipping

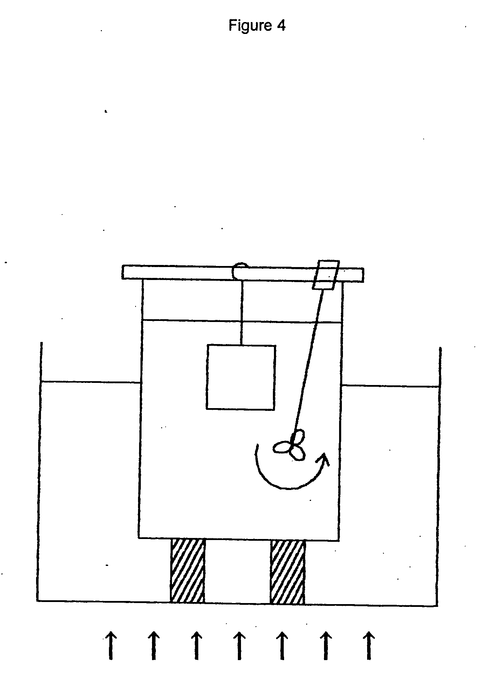

Figure 4 shows the PTFE soaking

### DISCLOSURE OF THE INVENTION

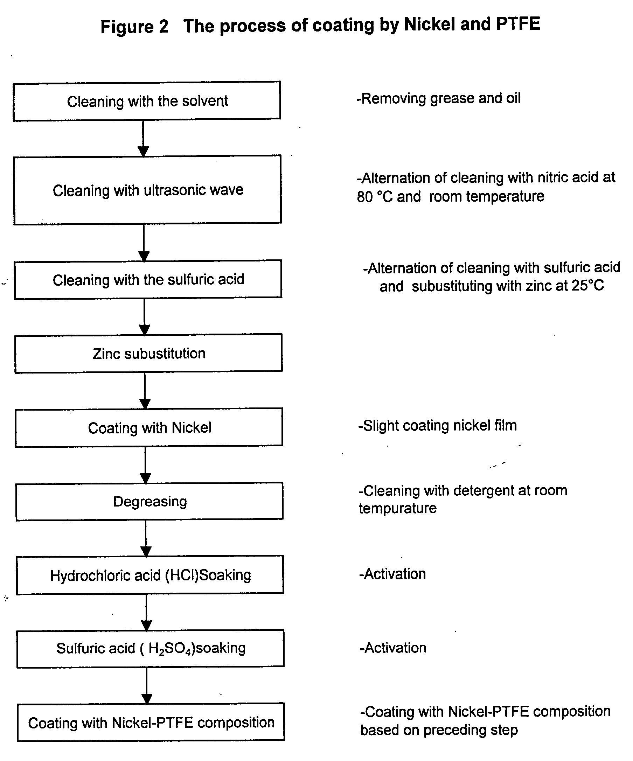

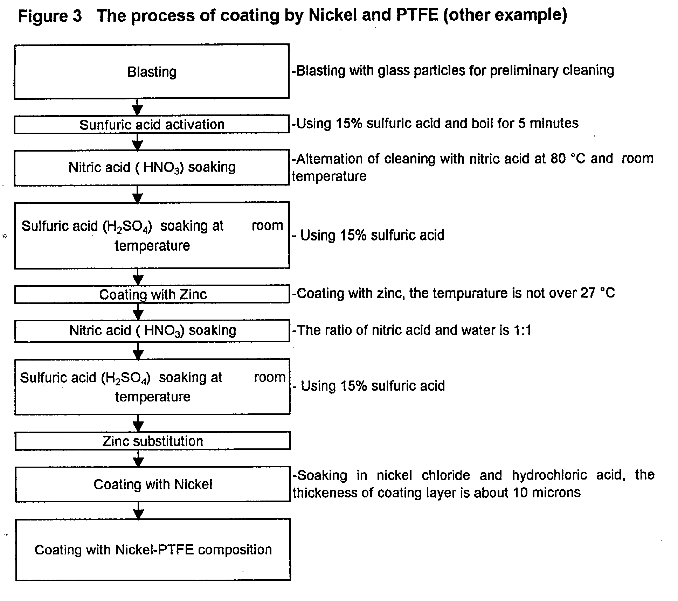

The description of the invention is presented in Figure 2. In this example, the mould is cleaned with the solution, ultrasonic wave and the sulfuric acid, respectively. After that, it is soaked by the sulfuric acid and oxidized by Zinc, repeat for 4-5 times, and then coated by Nickel. After cleaning by degreasing and activating the ion exchange by the chemical reaction and acid solution to get rid of the mould surface contamination, it is dipped with Nickel containing PTFE. This coating method has to pass the essential process that is the dipping of sulfuric acid. The other example was shown in Figure 3, after blasting with glass particles for preliminary cleaning, the mould is soaked with nitric acid and sulfuric acid and coated with Zinc at room temperature. After that, it is soaked by mixture of Nickel chloride and hydrochloric acid that makes the 10 microns thickness of coating layer. Finally, the mould was coated with Nickel containing PTFE.

### THE BEST METHOD OF THE INVENTION

As the said in the disclosure of the invention

### Example 1 (releasing test of Urethane resin)

The mould, which is coated by PTFE, is tested mention to the releasing of Urethane resin. The tested specimen is S45C, which is the general material for resin forming. The test method is in accordance with JIS K6301 to observe the mould releasing. The comparing was carried out by calculating the area ratio (remaining area/mould contact area).

**Table 1**

| shows each type of coating and binding ratio | | |
|---|---|---|
| **Coating Method** | **Coating Material** | **Binding Ratio** |
| This invention | Nickel and PTFE | 0 |
| Wet dipping | Hard Chromium film | 20 |
| None | None | 59 |
| Single spread | PTFE film | 0 |

### Example 2 (durable test)

The Nickel-PTFE coating mould of this invention is taken to test the durability. Every cavity receptors (cavity) of the mould, SKD11, are injected as example 1. The material is Urethane resin and the releasing agent is Silica. The abrasive is detected after 10000 times shot of injection (look at the change of gate) and the remaining of resin in the receptor (cavity) was observed.

**Table 2**

| shows the remaining of resin in the receptor (cavity) of each coating method | | | |
|---|---|---|---|
| **Coating Method** | **Coating Material** | **Abrasion** **(micron)** | **The remaining resin** |
| This invention | Nickel-PTFE coating | 0.2 | None |
| Wet dipping | Hard Chromium film | 23.8 | Remain at the bottom |
| None | None | 89 | Remain at the bottom corner |
| Single spread | PTFE film | 82 | Remain at the bottom corner |

The Single spread and wet dipping have very high abrasion and the self-coating film is released.

### YIELD OF THE INVENTION

Aluminium mould, which is coated by Nickel and PTFE, can be injected with Urethane resin, high releasability and durability. Moreover, the injected forming process is easier and more productive efficiency.

## Claims

1. The Aluminium mould for forming the Urethane resin **characterized in that** the mould is coated by Nickel containing PTFE film.

2. The Aluminium mould according to claim 1, which is used for forming the Urethane resin, is coated by the film of 5% Nickel containing PTFE film.

3. The Aluminium mould for forming the Urethane resin according to claim 1 and 2 **characterized in that** the mould is coated by 3-10 microns thickness of PTFE film.

4. The injecting process for Urethane forming by using Urethane injection mould **characterized in that** the surface of the Aluminium mould for injecting Urethane forming is coated by Nickel containing PTFE film.

5. The coating process with Nickel containing PTFE **characterized in that** after Aluminium mould is coated with Nickel and then soaked with PTFE solution in order to be coated by PTFE film having less than 1 micron particle size.
